# EUROPÄISCHE PATENTSCHRIFT

(11) **EP 1 108 989 B1**
(45) Veröffentlichungstag und Bekanntmachung des Hinweises auf die Patenterteilung: **24.01.2007**
(21) Anmeldenummer: 99124977.2
(22) Anmeldetag: 15.12.1999
(51) Int. Cl.: G01F 1/60

(54) **Vorrichtung zum Messen des Durchflusses eines Messmediums durch ein Messrohr**
Device for measuring the throughput of a measuring fluid in a measuring tube
Dispositif pour la mesure d'un débit d'un fluide de mesure dans un conduit de mesure

(43) Veröffentlichungstag der Anmeldung: 20.06.2001
(73) Patentinhaber: Endress + Hauser Flowtec AG, 4153 Reinach BL 1 (CH)
(72) Erfinder: Budmiger, Thomas, 4107 Ettingen (CH)
(74) Vertreter: Andres, Angelika Maria

(56) Entgegenhaltungen:
- EP-A- 0 548 439
- DE-C- 19 637 716
- DE-U- 9 103 046
- US-A- 5 499 543

## Beschreibung

Die Erfindung bezieht sich auf eine Vorrichtung zum Messen des Durchflusses eines Meßmediums, das ein Meßrohr in Richtung der Meßrohrachse durchfließt, mit einer Magnetanordnung, die ein das Meßrohr durchsetzendes und im wesentlichen quer zur Meßrohrachse verlaufendes Magnetfeld erzeugt, mit zumindest einer Meßelektrode, die in einem seitlichen Bereich des Meßrohres angeordnet ist und die galvanisch oder kapazitiv mit dem Meßmedium gekoppelt ist, und mit einer Auswerte-/Regeleinheit, die anhand der in die Meßelektrode induzierten Meßspannung Information über den Volumenstrom des Meßmediums in dem Meßrohr liefert, wobei eine Prüfelektrode im oberen Bereich des Meßrohres vorgesehen ist.

Eine derartige Vorrichtung ist aus der EP-A-0 548 439 bekannt.

Magnetisch-induktive Durchflußmeßgeräte nutzen für die volumetrische Strömungsmessung das Prinzip der elektrodynamischen Induktion aus: Senkrecht zu einem Magnetfeld bewegte Ladungsträger des Meßmediums induzieren in gleichfalls im wesentlichen senkrecht zur Durchflußrichtung des Meßmediums angeordneten Meßelektroden eine Spannung. Diese Induktionsspannung ist proportional zu der über den Querschnitt des Rohres gemittelten Strömungsgeschwindigkeit des Meßmediums; sie ist also proportional zum Volumenstrom.

Erhebliche Meßfehler können auftreten, wenn das Meßrohr nicht vollständig, sondern nur teilweise mit dem Meßmedium gefüllt ist, die Meßvorrichtung aber den von ihr gelieferten Meßergebnissen ein vollständig gefülltes Meßrohr zugrunde legt. Um diese Fehlerquelle zu elimieren, sind bereits Vorrichtungen bekannt geworden, die es ermöglichen, die Information über den jeweiligen Befüllungsgrad des Meßrohres bei der Bestimmung des Volumendurchflusses zu berücksichtigen. So wird in dem Deutschen Gebrauchsmuster G 91 03 046.3 eine magnetisch-induktive Durchflußmeßvorrichtung beschrieben, bei der zwei Elektromagneten wahlweise jeweils einzeln oder gemeinsam erregt werden und wobei bei der gemeinsamen Erregung wahlweise gleichsinnige oder gegensinnige Erregung möglich ist. Zur Ermittlung des Volumendurchflusses werden wenigstens zwei von einem entsprechenden Meßelektrodenpaar abgegriffene Spannungswerte herangezogen, die bei unterschiedlichen Erregungszuständen der Elektromagnetanordnung, z. B. gleichsinniger und gegensinniger Erregung der beiden Elektromagneten, gemessen wurden. Eine Auswerteeinheit verarbeitet die Meßsignale nachfolgend mittels empirisch ermittelter Parameter zu einem Durchflußraten-Ausgangssignal, bei dem die Fehler infolge der Teilbefüllung des Meßrohres elimiert sind. Um sicherzustellen, daß auch bei extrem niedrigem Befüllungsgrad des Meßrohres wenigstens ein Elektrodenpaar elektrisch mit dem Meßmedium gekoppelt ist und zur Bereitstellung des Meßsignals herangezogen werden kann, weist die in der G 91 03 046.3 beschriebene Durchflußmeßvorrichtung im unteren Bereich des Meßrohrquerschnitts zwei übereinander angeordnete Meßelektrodenpaare auf.

Darüber hinaus ist es bekannt geworden, zusätzlich zu zwei im mittleren Bereich des Meßrohres angeordneten Meßelektroden jeweils eine Prüfelektrode im oberen Bereich und eine weitere Prüfelektrode im unteren Bereich des Meßrohres vorzusehen, wobei üblicherweise die untere Prüfelektrode auf Masse liegt. Während die an den Prüfelektroden gemessene Spannung zur Erkennung der Befüllung des Meßrohres dient, läßt sich aus den an den Meßelektroden gemessenen Spannungswerten die gewünschte Information über den Volumendurchfluß durch das Meßrohr gewinnen.
Damit die bekannte Vorrichtung zur Bestimmung der Befüllung des Meßrohres möglichst universell einsetzbar ist, muß der Quellwiderstand der an den Prüfelektroden angelegten Prüfspannung relativ hoch sein (z. B. in der Größenordnung von 100 kΩ). Nur so ist die Vorrichtung zur Bestimmung des Volumendurchflusses universell bei der großen Palette abzudeckender Meßmedien einsetzbar, die sich bekanntlich hinsichtlich ihrer elektrischen Leitfähigkeit ganz erheblich voneinander unterscheiden können.

Der Nachteil der bekannten Lösung zeigt sich, wenn anstelle eines Kompaktgerätes, bei dem der eigentliche Sensor und der Elektronikteil in einem Gehäuse untergebracht sind, ein Meßgerät zum Einsatz kommt, bei dem der Sensor im Prozeß angeordnet und über eine Verbindungsleitung, üblicherweise ein Koaxkabel, mit einer entfernten Umformelektronik verbunden ist. Diese Verbindungsleitung bewirkt eine von der Länge des Koaxkabels abhängige Spannungsteilung, wobei ab einer gewissen Länge der Verbindungsleitung überhaupt kein meßbarer Spannungsanteil mehr an der Prüfelektrode zur Verfügung steht. Folglich ist die bekannte Meßvorrichtung zur Erkennung der Befüllung des Meßrohres auf gewisse Anwendungsfälle beschränkt - nämlich auf den Einsatz in Kompaktgeräten oder in Geräten, bei denen die Verbindungsleitung zwischen dem Sensor und der entfernten Elektronikeinheit ca. 10 m nicht überschreitet.

Der Erfindung liegt die Aufgabe zugrunde, eine universell einsetzbare und kostengünstige Vorrichtung zum Messen des Volumendurchflusses bzw. zum Erkennen der Befüllung eines Meßrohres vorzuschlagen.

Die Aufgabe wird dadurch gelöst, daß die Auswerte-/Regeleinheit so eingerichtet ist, daß sie ein Testsignal auf die Prüfelektrode gibt und anhand des von der Meßelektrode empfangenen Antwortsignals auf das Testsignal Information über die Befüllung des Meßrohres bereitstellt. Erfindungsgemäß erfolgt die sog. `Leerrohrdetektion`, also die Erkennung, ob das Meßrohr vollständig gefüllt oder nur teilweise gefüllt bzw. ganz leer ist, durch Anlegen eines Testsignals an die Prüfelektrode. Ist das Meßrohr gefüllt, so zeigt sich dieses Testsignal als Antwortsignal an der Meßelektrode. Ist das Meßrohr hingegen nur teilweise gefüllt oder ist es leer, so besteht keine bzw. eine gestörte elektrische Verbindung zwischen der obenliegenden Prüfelektrode und der Meßelektrode. Folglich tritt an der Meßelektrode kein Antwortsignal oder aber ein abgeschwächtes Antwortsignal auf.

Obwohl prinzipiell eine Meßelektrode zur Bestimmung des Volumendurchflusses und zur Erkennung der `Leerrohrdetektion` ausreichend ist, sieht eine vorteilhafte Ausgestaltung der erfindungsgemäßen Vorrichtung eine zweite Meßelektrode vor, die in dem der ersten Meßelektrode gegenüberliegenden Bereich des Meßrohres angeordnet ist. Bevorzugt liegen sich die beiden Meßelektroden im mittleren Bereich des Meßrohres diametral gegenüber.

Zwecks Ausnutzung von Symmetrieverhältnissen und einer hierdurch ermöglichten redundanten Messung ist die Prüfelektrode bezüglich der beiden Meßelektroden so angeordnet ist, daß sie im wesentlichen den gleichen Abstand zu jeder der beiden Meßelektroden aufweist. Ein Testsignal, das von der Prüfelektrode ausgesendet wird, erzeugt also ein im wesentlichen gleiches Antwortsignal an jeder der beiden Meßelektroden. Treten hier gravierende Unterschiede auf, so deutet dies u. U. auf eine Fehlfunktion, z. B. einer der Meßelektroden, hin.

Gemäß einer vorteilhaften Weiterbildung der erfindungsgemäßen Vorrichtung ist eine zweite Prüfelektrode vorgesehen, die der ersten Prüfelektrode im wesentlichen diametral gegenüber liegt, wobei die erste Prüfelektrode vorzugsweise im obersten Punkt des Meßrohres und die zweite Prüfelektrode im untersten Punkt des Meßrohres angeordnet ist. Gemäß einer Ausgestaltung der erfindungsgemäßen Vorrichtung wird vorgeschlagen, daß eine der beiden Prüfelektroden auf Masse liegt. Vorzugsweise handelt es sich bei der auf Masse liegenden Prüfelektrode um die im unteren Bereich des Meßrohres angeordnete Elektrode. Wie bereits zuvor angedeutet, ist die zweite als Bezugselektrode verwendete Prüfelektrode nicht unbedingt erforderlich. Als Bezugspotential können auch Erdscheiben dienen, die beispielsweise an den Flanschen zur Befestigung der Durchflußmeßvorrichtung in einem Rohrsystem vorgesehen sind.

Gemäß einer bevorzugten Weiterbildung der erfindungsgemäßen Vorrichtung wird angeregt, daß es sich bei dem Testsignal um einen symmetrischen Impuls handelt. Diese Ausgestaltung hat gegenüber einem beliebigen nichtsymmetrischen Testsignal folgenden Vorteil: Die relativ hohe Energiedichte des Testsignals kann dazu führen, daß die elektro-chemischen Potentiale innerhalb des Meßmediums verschoben werden. Ist das Testsignal als symmetrischer Impuls ausgelegt, so mitteln sich die Potentialverschiebungen ungefähr zu Null.

Eine bevorzugte Ausgestaltung der erfindungsgemäßen Vorrichtung sieht vor, daß die Auswerte-/Regeleinheit die Antwortsignale an der Meßelektrode/den Meßelektroden mit dem Testsignal korreliert. Dies ist ein einfaches und zuverlässiges Verfahren zur Erkennung, ob das Antwortsignal auf das Testsignal an der Meßelektrode/an den Meßelektroden auftritt oder nicht.

Weiterhin sieht eine vorteilhafte Weiterbildung der erfindungsgemäßen Vorrichtung vor, daß die Auswerte-/Regeleinheit die Information über den Befüllungsgrad ermittelt, indem sie die an der Meßelektrode den Meßelektroden gemessenen Antwortsignale mit vorgegebenen Referenzsignalen vergleicht. Diese Referenzsignale werden vorab in einem separaten Meßprozeß unter den jeweils herrschenden Prozeß- und Systembedingungen ermittelt. Hierdurch können die Toleranzen anwendungsbezogen und folglich relativ gering ausgelegt sein, wodurch sich die Güte der Messungen verbessern und damit die verläßliche Erkennung eines nicht vollständig gefüllten Meßrohres erreichen läßt.

Eine bevorzugte Weiterbildung der erfindungsgemäßen Vorrichtung schlägt eine Speichereinheit vor, in der die vorgegebenen Referenzsignale abgespeichert sind.

Die Erfindung wird anhand der nachfolgenden Zeichnungen näher erläutert. Es zeigt:
Fig. 1: eine schematische Darstellung einer ersten Ausgestaltung der erfindungsgemäßen Vorrichtung,
Fig. 2: eine schematische Darstellung einer zweiten bevorzugten Ausgestaltung der erfindungsgemäßen Vorrichtung und
Fig. 3: ein Flußdiagramm zur Ansteuerung der Auswerte-/Regeleinheit.

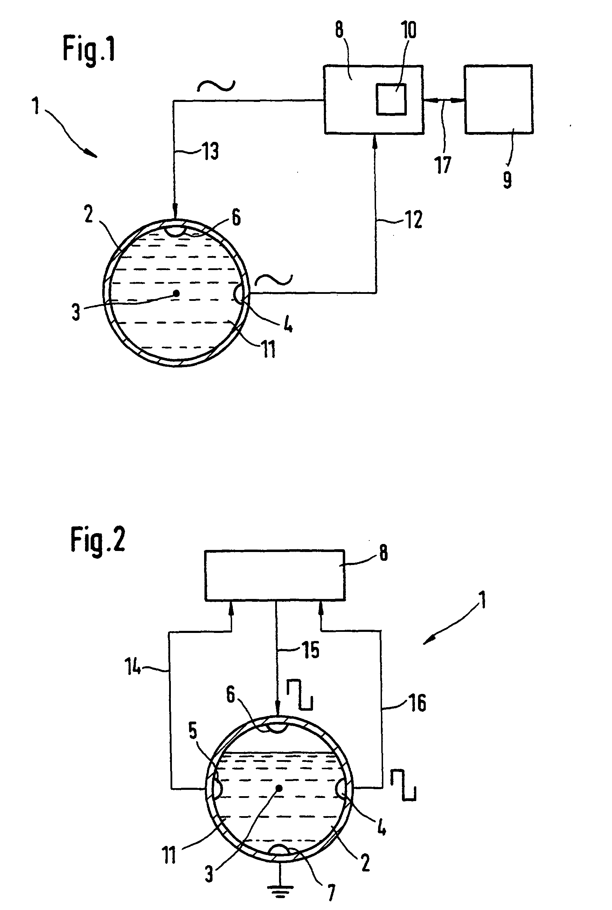

Fig. 1 zeigt eine schematische Darstellung einer ersten Ausgestaltung der erfindungsgemäßen Vorrichtung 1. In Fig. 2 ist eine zweite bevorzugte Ausgestaltung der erfindungsgemäßen Vorrichtung 1 dargestellt. Der Hauptunterschied zwischen den beiden Ausgestaltungen liegt darin, daß bei der ersten Ausgestaltung lediglich eine Meßelektrode 4 und eine Prüfelektrode 6 vorgesehen sind, während bei der zweiten Ausgestaltung zwei Meßelektroden 4, 5 und zwei Prüfelektroden 6, 7 vorgesehen sind.

Bei jeder der beiden Ausgestaltungen wird das Meßrohr 2 eines in der Zeichnung nicht gesondert dargestellten Durchflußmeßgerätes von einem Meßmedium 11 in Richtung der Meßrohrachse 10 durchflossen. Das Meßmedium 11 ist zumindest in geringem Umfang elektrisch leitfähig. Das Meßrohr 2 selbst ist aus einem nicht-leitfähigen Material gefertigt, oder es ist zumindest an seiner Innenseite mit einem nicht-leitfähigen Material ausgekleidet.

Infolge eines senkrecht zur Flußrichtung des Meßmediums 11 ausgerichteten Magnetfeldes, das üblicherweise von zwei diametral angeordneten Elektromagneten erzeugt wird, die in den Zeichnungen ebenfalls nicht zu sehen sind, wandern in dem Meßmedium 11 befindliche Ladungsträger zu der entgegengesetzt gepolten Meßelektrode 4 bzw. 4, 5 ab. Die sich an der Meßelektrode 4 bzw. an den Meßelektroden 3, 4 aufbauende Spannung ist proportional zu der über den Querschnitt des Meßrohres 2 gemittelten Strömungsgeschwindigkeit des Meßmediums 11, d. h. sie ist ein Maß für den Volumenstrom des Meßmediums 11 im Meßrohr 2. Das Meßrohr 2 ist übrigens über Verbindungselemente, z. B. Flansche, die in der Zeichnung nicht gesondert dargestellt sind, mit einem Rohrsystem, durch das das Meßmedium 11 hindurchströmt, verbunden.
In den beiden gezeigten Fällen befinden sich die Meßelektroden 3, 4 in direktem Kontakt mit dem Meßmedium; die Kopplung kann jedoch, wie bereits an vorhergehender Stelle erwähnt, auch kapazitiver Natur sein.

Über Verbindungsleitungen 12, 13 bzw. 14, 15, 16 sind die Meßelektroden 4, 5 und die Prüfelektroden 6, 7 mit der Auswerte-/Regeleinheit 8 verbunden. Diese steht über eine Verbindungsleitung 17 mit einer Eingabe-/Ausgabeeinheit in Verbindung. Der Auswerte-/Regeleinheit 8 ist eine Speichereinheit 10 zugeordnet.

Die erfindungsgemäße Vorrichtung 1 arbeitet bevorzugt folgendermaßen: Die Auswerte-/Regeleinheit 8 gibt in vorgegebenen zeitlichen Abständen *t_{M}* ein Testsignal auf die Prüfelektrode 6. Vorzugsweise handelt es sich bei dem Testsignal um einen symmetrischen Puls. Wie bereits zuvor erläutert, werden in das Meßmedium 11 induzierte Potentialschwankungen bei Anlegen eines symmetrisch aufgebauten Testsignals zumindest näherungsweise zu Null gemittelt. Die Volumendurchflußmessung wird also durch den überlagerten Prozeß zur Erkennung der Befüllung des Meßrohres 2 kaum gestört.

Das auf die Prüfelektrode 6 gegebene Testsignal erscheint als Antwortsignal an der Meßelektrode 4 bzw. an den Meßelektroden 4, 5, falls sich das Meßmedium 11 zwischen der Prüfelektrode 6 und der Meßelektrode 4 bzw. den Meßelektroden 4, 5 befindet. Vorzugsweise ermittelt die Auswerte-/Regeleinheit 8 das Antwortsignal, indem sie eine Korrelation zwischen dem Testsignal und dem Antwortsignal an der jeweiligen Meßelektrode 4, 5 durchführt.

Sowohl das Meßmedium 11 als auch die sonstigen äußeren System- und Prozeßbedingungen haben einen großen Einfluß darauf, wie zuverlässig die erfindungsgemäße Vorrichtung 1 zur Bestimmung des Volumendurchflusses letztendlich arbeitet. Daher wird unter definierten System- und Prozeßbedingungen, z. B. bei einem vollständig gefüllten Meßrohr 2, ein definiertes Testsignal auf die Prüfelektrode 6 gegeben. An der Meßelektrode 4 bzw. an den Meßelektroden 4, 5 wird jeweils das entsprechende Antwortsignal ermittelt. Das gemessene Antwortsignal wird als Referenz-Antwortsignal bzw. als Soll-Antwortsignal in der Speichereinheit 10 gespeichert. Mit diesem Referenz-Antwortsignal werden alle nachfolgend ermittelten Ist-Antwortsignale verglichen. Liegen die Ist-Antwortsignale innerhalb vorgegebener Toleranzen A um das Soll-Antwortsignal, so ist dies ein Zeichen dafür, daß die Massendurchflußmessung bei einem vollständig gefüllten Meßrohr 2 durchgeführt wird. Liegt das Ist-Antwortsignal hingegen außerhalb der vorgegebenen Toleranzen A um das Soll-Antwortsignal, so gibt die Auswerte-/Regeleinheit 8 dem Bedienpersonal z. B. über die Eingabe-/Ausgabeeinheit eine Mitteilung, daß das Meßrohr 2 nicht vollständig gefüllt ist.

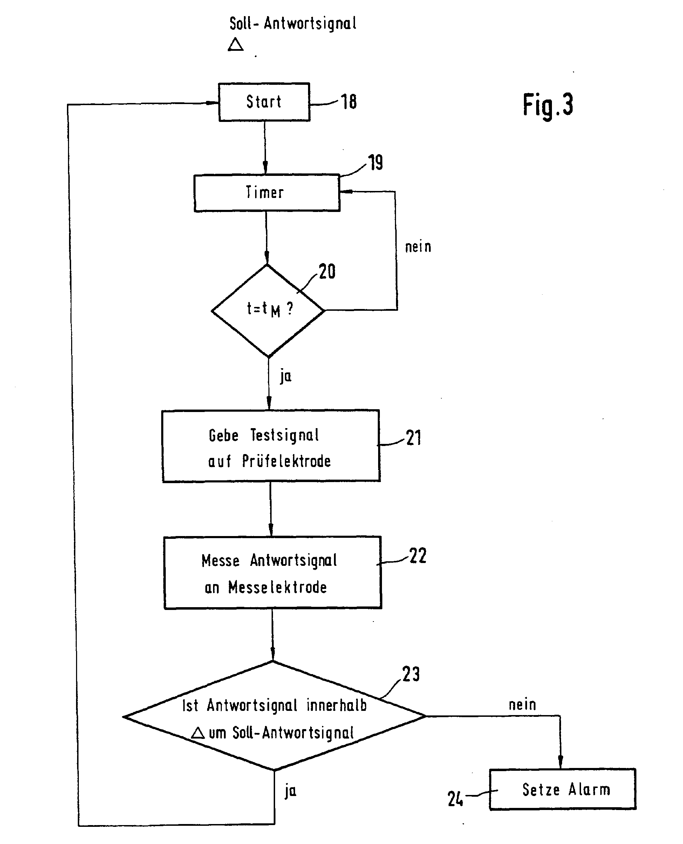

In Fig. 3 ist ein Flußdiagramm zur Ansteuerung der Auswerte-/Regeleinheit 8 dargestellt. Wie bereits gesagt, wird unter vorgegebenen System- und Prozeßbedingungen zu Beginn der eigentlichen Meßwertaufnahme ein Testsignal auf die Prüfelektrode 6 gegeben und das entsprechende Antwortsignal an der Meßelektrode 4 bzw. die entsprechenden Antwortsignale an den Meßelektroden 4, 5 als Soll-Antwortsignal bzw. als Soll-Antwortsignale gespeichert. Weiterhin werden Toleranzen Δ für das Antwortsignal- bzw. die Antwortsignale vorgegeben. Vorzugsweise erfolgt die Ermittlung der Referenz-Antwortsignale bei vollständig mit dem Meßmedium 11 gefülltem Meßrohr 2.

Unter dem Programmpunkt 18 wird der Meß-/Auswertevorgang gestartet. Über einen Timer (Programmpunkt 19) und eine Zeitabfrage (Programmpunkt 20) wird nach einer vorgegebenen Zeit *t_{M}* bei Programmpunkt 21 das definierte Testsignal auf die Prüfelektrode 6 gegebenen. Das Antwortsignal wird unter Programmpunkt 22 an zumindest einer Meßelektrode 4; 5 gemessen. Liegt das Ist-Antwortsignal innerhalb der vorgegebenen Toleranz A um das Soll-Antwortsignal, so wird dies von der Auswerte-/Regeleinheit 8 als gewünschter Sollzustand gewertet. Die einzelnen Programmpunkte werden nachfolgend immer wieder nach der vorgegebenen Zeit *t_{M}* durchlaufen. Ergibt die Messung und Auswertung unter den Programmpunkten 22, 23, daß das Ist-Antwortsignal außerhalb der vorgegebenen Toleranz A um das Soll-Antwortsignal liegt, so wird dem Bedienpersonal über die Eingabe-/Ausgabeeinheit 10 angezeigt, daß das Meßrohr 2 nicht die definierte Befüllung des Meßrohres 2 aufweist.

### Bezugszeichenliste

- 1: erfindungsgemäße Vorrichtung
- 2: Meßrohr
- 3: Meßrohrachse
- 4: erste Meßelektrode
- 5: zweite Meßelektrode
- 6: erste Prüfelektrode
- 7: zweite Prüfelektrode
- 8: Auswerte-/Regeleinheit
- 9: Ausgabe-/Eingabeeinheit
- 10: Speichereinheit
- 11: Meßmedium
- 12: Verbindungsleitung
- 13: Verbindungsleitung
- 14: Verbindungsleitung
- 15: Verbindungsleitung
- 16: Verbindungsleitung
- 17: Verbindungsleitung

## Patentansprüche

1. Vorrichtung zum Messen des Durchflusses eines Meßmediums, das ein Meßrohr in Richtung der Meßrohrachse durchfließt, mit einer Magnetanordnung, die ein das Meßrohr durchsetzendes und im wesentlichen quer zur Meßrohrachse verlaufendes Magnetfeld erzeugt, mit zumindest einer Meßelektrode, die in einem seitlichen Bereich des Meßrohres angeordnet ist und die galvanisch oder kapazitiv mit dem Meßmedium gekoppelt ist, und mit einer Auswerte-/Regeleinheit, die anhand der in die Meßelektrode induzierten Meßspannung Information über den Volumenstrom des Meßmediums in dem Meßrohr liefert, wobei eine Prüfelektrode (6) im oberen bereich des Meßrohres (2) vorgesehen ist,
**dadurch gekennzeichnet,**
**daß** die Auswerte-/Regeleinheit (8) so eingerichtet ist, daß sie ein Testsignal auf die Prüfelektrode (6; 7) gibt und
anhand des von der Meßelektrode (4; 5) empfangenen Antwortsignals auf das Testsignal Information über die Befüllung des Meßrohres (2) bereitstellt.

2. Vorrichtung nach Anspruch 1,
**dadurch gekennzeichnet,**
**daß** eine zweite Meßelektrode (5; 4) vorgesehen ist, die in dem der ersten Meßelektrode (4; 5) gegenüberliegenden Bereich des Meßrohres (2) angeordnet ist.

3. Vorrichtung nach Anspruch 2,
**dadurch gekennzeichnet,**
**daß** sich die beiden Meßelektroden (4, 5) im mittleren Bereich des Meßrohres (2) diametral gegenüber liegen.

4. Vorrichtung nach Anspruch 2 oder 3,
**dadurch gekennzeichnet,**
**daß** die Prüfelektrode bezüglich der beiden Meßelektroden so angeordnet ist, daß sie im wesentlichen den gleichen Abstand zu jeder der beiden Meßelektroden aufweist.

5. Vorrichtung nach Anspruch 1, 2, 3 oder 4,
**dadurch gekennzeichnet,**
**daß** eine zweite Prüfelektrode (7; 6) vorgesehen ist, die der ersten Prüfelektrode (6; 7) im wesentlichen diametral gegenüber liegt,
**daß** die erste Prüfelektrode (6; 7) vorzugsweise im obersten Punkt des Meßrohres (2) angeordnet ist und
**daß** die zweite Prüfelektrode (7; 6) vorzugsweise im untersten Punkt des Meßrohres (2) angeordnet ist.

6. Vorrichtung nach Anspruch 1, 2, 3, 4 oder 5,
**dadurch gekennzeichnet,**
**daß** eine der beiden Prüfelektroden (6; 7) auf Masse liegt.

7. Vorrichtung nach Anspruch 1 oder nach einem oder mehreren der Ansprüche 2 bis 6,
**dadurch gekennzeichnet,**
**daß** es sich bei dem Testsignal um einen symmetrischen Impuls handelt.

8. Vorrichtung nach Anspruch 1 oder 7,
**dadurch gekennzeichnet,**
**daß** die Auswerte-/Regeleinheit (8) die Antwortsignale an der Meßelektrode(6; 7) /den Meßelektroden (6, 7) mit dem Testsignal korreliert.

9. Vorrichtung nach Anspruch 1, 7 oder 8,
**dadurch gekennzeichnet,**
**daß** die Auswerte-/Regeleinheit (8) so eingerichtet ist, daß sie die Information über den Befüllungsgrad des Meßrohres (2) ermittelt, indem sie die an der Meßelektrode (4; 5) / den Meßelektroden (4, 5) gemessenen Antwortsignale mit vorgegebenen Referenzsignalen vergleicht.

10. Vorrichtung nach Anspruch 9,
**dadurch gekennzeichnet,**
**daß** die vorgegebenen Referenzsignale einem definierten Befüllungsgrad des Meßrohres (2) entsprechen.

11. Vorrichtung nach Anspruch 9 oder 10,
**dadurch gekennzeichnet,**
**daß** eine Speichereinheit (10) vorgesehen ist, in der die vorgegebenen Referenzsignale abgespeichert sind.

## Claims

1. Apparatus for measuring the flow of a medium to be measured which flows through a measuring tube in the direction of the measuring tube axis, having a magnetic arrangement which generates a magnetic field which permeates the measuring tube and runs substantially transversely with respect to the measuring tube axis, having at least one measuring electrode which is arranged in a lateral region of the measuring tube and is coupled electrically or capacitively to the medium to be measured, and having an evaluation/control unit which, using the measurement voltage induced in the measuring electrode, yields information about the volumetric flow of the medium to be measured in the measuring tube, a test electrode (6) being provided in the upper region of the measuring tube (2),
**characterised in that** the evaluation/control unit (8) is set up in such a way that it passes a test signal to the test electrode (6; 7) and
uses the response signal to the test signal, said response signal being received by the measuring electrode (4; 5), to provide information about the degree of filling of the measuring tube (2).

2. Apparatus according to Claim 1,
**characterised in that** a second measuring electrode (5; 4) is provided, which is arranged in the region of the measuring tube (2) opposite the first measuring electrode (4; 5).

3. Apparatus according to Claim 2,
**characterised in that** the two measuring electrodes (4, 5) are diametrically opposite one another in the central region of the measuring tube (2).

4. Apparatus according to Claim 2 or 3,
**characterised in that** the test electrode is arranged with respect to the two measuring electrodes in such a way that it is substantially at the same distance from each of the two measuring electrodes.

5. Apparatus according to Claim 1, 2, 3 or 4,
**characterised in that** a second test electrode (7; 6) is provided, which is substantially diametrically opposite the first test electrode (6; 7),
**in that** the first test electrode (6; 7) is preferably arranged in the topmost point of the measuring tube (2) and
**in that** the second test electrode (7; 6) is preferably arranged in the bottommost point of the measuring tube (2).

6. Apparatus according to Claim 1, 2, 3, 4 or 5,
**characterised in that** one of the two test electrodes (6; 7) is earthed.

7. Apparatus according to Claim 1, or according to one or more of Claims 2 to 6,
**characterised in that** the test signal is a symmetrical pulse.

8. Apparatus according to Claim 1 or 7,
**characterised in that** the evaluation/control unit (8) correlates the response signals at the measuring electrode (6; 7)/the measuring electrodes (6, 7) with the test signal.

9. Apparatus according to Claim 1, 7 or 8,
**characterised in that** the evaluation/control unit (8) is set up in such a way that it determines the information about the degree of filling of the measuring tube (2) by comparing the response signals measured at the measuring electrode (4; 5)/the measuring electrodes (4, 5) with predetermined reference signals.

10. Apparatus according to Claim 9,
**characterised in that** the predetermined reference signals correspond to a defined degree of filling of the measuring tube (2).

11. Apparatus according to Claim 9 or 10,
**characterised in that** a storage unit (10) is provided, in which the predetermined reference signals are stored.

## Revendications

1. Dispositif destiné à la mesure du débit d'un produit, qui circule à travers un tube de mesurage dans le sens de l'axe du tube, avec un circuit magnétique, qui génère un champ magnétique traversant le tube de mesurage et est pour l'essentiel perpendiculaire à l'axe du tube de mesurage, avec au moins une électrode de mesure, qui est disposée dans une zone latérale du tube de mesurage et qui est couplée par une liaison galvanique ou capacitive avec le produit mesuré, et avec une unité d'exploitation / de régulation, qui fournit une information sur le débit volumétrique du produit mesuré dans le tube de mesurage au moyen de la tension de mesure induite dans l'électrode de mesure, une électrode de contrôle (6) étant prévue dans la zone supérieure du tube de mesurage (2),
**caractérisé en ce que**
l'unité d'exploitation / de régulation (8) est configurée de telle manière qu'elle applique un signal de test à l'électrode de contrôle (6 ; 7) et,
au moyen du signal reçu par l'électrode de mesure (4 ; 5) en réponse au signal de test, met à disposition l'information concernant le degré de remplissage du tube de mesurage (2).

2. Dispositif selon la revendication 1,
**caractérisé en ce que**
une deuxième électrode de mesure (5 ; 4) est prévue, laquelle est disposée dans la zone du tube de mesurage (2) opposée à la première électrode de mesure (4 ; 5).

3. Dispositif selon la revendication 2,
**caractérisé en ce que**
les deux électrodes de mesure (4, 5) sont disposées de façon diamétralement opposée dans la zone centrale du tube de mesurage (2).

4. Dispositif selon la revendication 2 ou 3,
**caractérisé en ce que**
l'électrode de contrôle est disposée par rapport aux deux électrodes de mesure de telle manière qu'elle présente pour l'essentiel la même distance par rapport à chacune des deux électrodes de mesure.

5. Dispositif selon la revendication 1, 2, 3 ou 4,
**caractérisé en ce que**
une deuxième électrode de contrôle (7 ; 6) est prévue, laquelle est disposée pour l'essentiel de manière diamétralement opposée à la première électrode de contrôle (6 ; 7),
la première électrode de contrôle (6 ; 7) est disposée de préférence dans la partie supérieure du tube de mesurage (2) et
la deuxième électrode de contrôle (7 ; 6) est disposée de préférence dans la partie inférieure du tube de mesurage (2).

6. Dispositif selon la revendication 1, 2, 3, 4 ou 5,
**caractérisé en ce que**
une des deux électrodes de contrôle (6 ; 7) est reliée à la masse.

7. Dispositif selon la revendication 1 ou selon une ou plusieurs des revendications 2 à 6,
**caractérisé en ce que**
concernant le signal de test, il s'agit d'une impulsion symétrique.

8. Dispositif selon la revendication 1 ou 7,
**caractérisé en ce que**
l'unité d'exploitation / de régulation (8) corrèle les signaux de réponse sur l'électrode de mesure (6 ; 7) / les électrodes de mesure (6, 7) avec le signal de test.

9. Dispositif selon la revendication 1, 7 ou 8,
**caractérisé en ce que**
l'unité d'exploitation / de régulation (8) est configurée de telle manière à ce qu'elle détermine l'information concernant le degré de remplissage du tube de mesurage (2), **en ce qu'**elle compare les signaux de réponse mesurés sur l'électrode de mesure (4 ; 5) / les électrodes de mesure (4, 5) avec des signaux de référence prédéfinis.

10. Dispositif selon la revendication 9,
**caractérisé en ce que**
les signaux de référence prédéfinis correspondent à un degré de remplissage défini du tube de mesurage (2).

11. Dispositif selon la revendication 9 ou 10,
**caractérisé en ce que**
une unité de mémoire (10) est prévue, dans laquelle les signaux de référence prédéfinis sont enregistrés.
